Europäisches Patentamt

European Patent Office

Office européen des brevets

(19)

(11) Publication number: **0 459 276 A2**

# EUROPEAN PATENT APPLICATION

(12)

(21) Application number: **91108209.7**

(22) Date of filing: **21.05.91**

(51) Int. Cl.⁵: **G06F 15/80**

(30) Priority: **21.05.90 JP 129155/90**
**04.06.90 JP 145986/90**

(43) Date of publication of application:
**04.12.91 Bulletin 91/49**

(84) Designated Contracting States:
**BE DE FR GB IT NL SE**

(71) Applicant: **YOZAN INC.**
**3-5-18, Kitazawa, Setagaya-ku**
**Tokyo 155(JP)**

(72) Inventor: **Takatori, Sunao, c/o YOZAN Inc.**
**3-5-18, Kitazawa, Setagaya-ku**
**Tokyo 155(JP)**
Inventor: **Yamamoto, Makoto, c/o YOZAN Inc.**
**3-5-18, Kitazawa, Setagaya-ku**
**Tokyo 155(JP)**

(74) Representative: **Patentanwälte Grünecker,**
**Kinkeldey, Stockmair & Partner**
**Maximilianstrasse 58**
**W-8000 München 22(DE)**

(54) **Data processing system.**

(57) The invention provides for a data processing system with a plurality of neurons each of which outputs a predetermined data after igniting according to the predetermined processing results performed onto an input data; neurons in the above neural layers are divided into the neuron groups with a fixed number of neurons; neurons in a part of each neuron group belong to the adjacent neuron group at the same time; neurons in each neuron group correspond to neurons in the following neural layer, respectively; number of neurons $N_n$ in the nth neural layer can be calculated by the following formula:

$$N_n = ( N_{n-1} - v)/( a - v)^2$$

where, "$N_{n-1}$" is the number of neurons at (n-1)th layer; "a" is the number of neurons in one neuron group; and "v" is the number of strings that belong to another adjacent neuron group.

FIG. 1

The present invention relates to a data processing system based on the concept of the neural network.

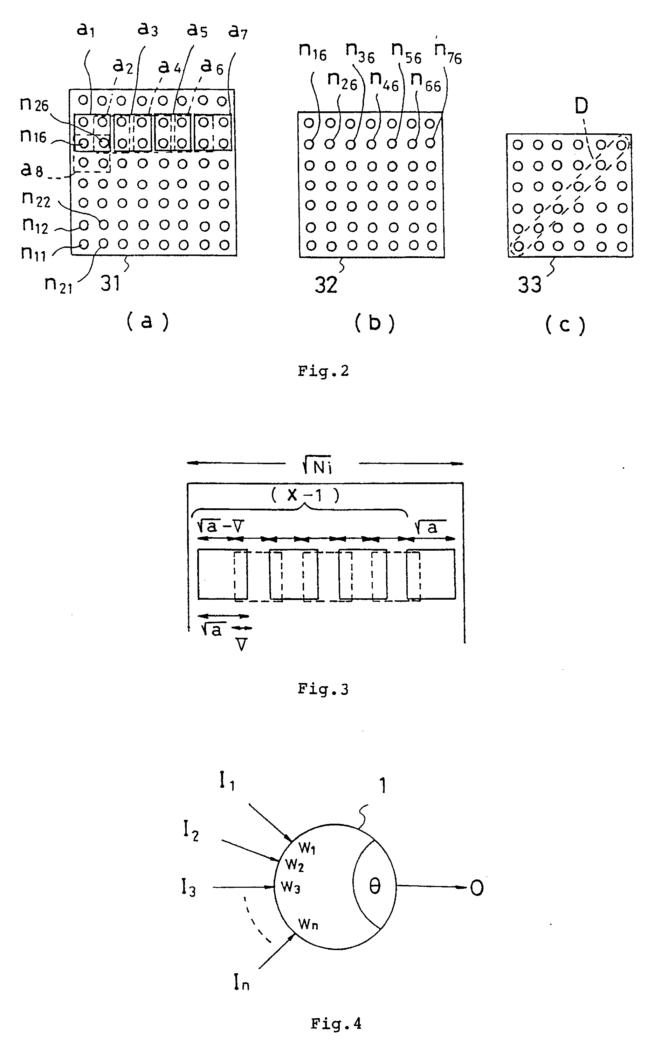

The neural network according to a data processing system of this type is structured with layers by preparing neuron model (hereinafter called "neuron")1, shown in Figure 4, in parallel. Neurons in each layer is synapse connected to all neurons in other adjacent layers, so as to input and output data. According to neuron1, data O is output in accordance with the comparison result between the sum of multiplied input data from outside I1, I2, I3...In by weights W1, W2, W3...Wn and threshold $\theta$.

Various compression methods are possible. For example, when normalization function I(f) is applied, output data O is expressed as follows:

$$O = I [\Sigma Wn \cdot In - \theta] \qquad (1)$$

That is; when $\Sigma Wn \cdot In$ exceed threshold $\theta$, the neuron ignites so that output data O becomes "1"; and when $\Sigma Wn \cdot In$ is smaller than threshold $\theta$, output data becomes "0".

A conventional neural network is structured to form neural layers by preparing above neurons in parallel and to connect the above neural layers in series. Neural layer, for example, comprises 3 layers, input layer, middle layer and output layer, as it is described by Perceptrons proposed by Rosenblatt, in which neurons of each layer are synapse connected to all neurons of other adjacent layer.

According to the data processing system of this type, it is necessary to prepare a plurality of neurons in an input layer for the processing of input data. However, comparatively a few neurons are necessary in an output layer since they simply output the processing result, practically. Conventionally, no specific theory was established with respect to the method for deciding the number of neurons in the middle layer, so that the equal numbers of neurons for all neural layers were normally prepared. Therefore, a problem that all neurons are not efficiently used due to the enormous number of neurons.

The present invention is to solve the above problems of the prior art and has an object to provide a data processing system comprising the necessary minimum number of neurons for the processing objects.

A data processing system according to the present invention is characterized in that:

A) a plurality of the mutually independent data processing portions is prepared which comprises a plurality of neural layers; neurons in a neural layer of each data processing portion are divided into the neuron groups with a fixed number of neurons; neurons in a part of each neuron group belong to the adjacent neuron group at the same time; neurons in each neuron group correspond to neurons in the following neural layer, respectively; number of neurons $N_n$ in the nth neural layer can be calculated by the following formula:

$$N_n = \{(\sqrt{N_{n-1}} - v)/(\sqrt{a} - v)\}^2$$

where, "$N_{n-1}$" is the number of neurons at (n-1)-th layer; "a" is the number of neurons in one neuron group; and "v" is the number of strings that belong to another adjacent neuron group.

B) neurons in a neural layer are divided into the neuron groups with a fixed number of neurons; neurons in a part of each neuron group belong to the adjacent neuron group at the same time; neurons in each neuron group correspond to neurons in the following neural layer, respectively; number of neurons $N_n$ in the nth neural layer can be calculated by the following formula:

$$N_n = \{(\sqrt{N_{n-1}} - v)/(\sqrt{a} - v)\}^2$$

where, "$N_{n-1}$" is the number of neurons at (n-1)-th layer; "a" is the number of neurons in one neuron group; and "v" is the number of strings that belong to another adjacent neuron group.

Hereinafter, the present invention is described with reference to drawings, which show:

Fig. 1    a character recognition system with a first embodiment of a data processing system;

Fig. 2    schematic diagrams of neurons in an input layer, a middle layer and an output layer;

Fig. 3    a diagram showing the overlapping relationship among each neuron group;

Fig. 4    a schematic diagram of an embodiment of a neuron;

Fig 5    a character recognition system with a second embodiment of a data processing system;

Fig. 6    the structures of the pre-processing and the pro-processing portions;

Fig. 7    schematic diagrams indicating the ignition distribution of neurons with respect to the input layer;

Fig. 8    a graph indicating the relationship between the number of learnings and the change in weight.

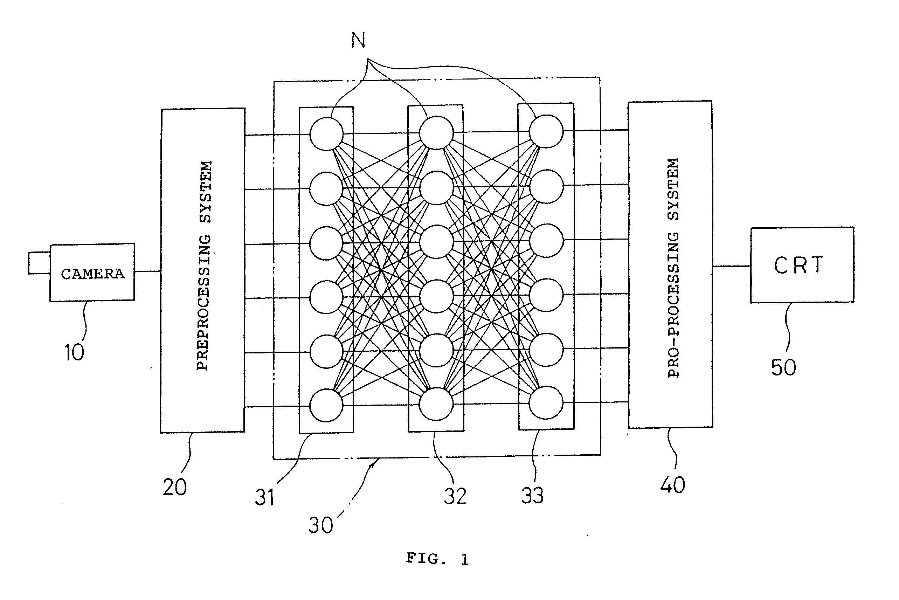

Figure 1 shows a character recognition system comprising a data processing system according to a first embodiment of the present invention. This character recognition system comprises a video camera 10, a preprocessing system 20, a data processing system 30, a pro-processing system 40 and a display 50. the video camera 10 is prepared for inputting characters and is connected to the preprocessing system 20. The preprocessing system 20 is, for example, a conventional image processing system that extracts the characteristic data of input characters (for example, number of end points, number of branch points, etc.) and outputs these characteristic data to the data processing system 30. The data processing system 30 structures the neural network, as it is described later, and recognizes an input character from the preprocessing system 20 with respect to its characteristic data, then outputs data to the pro-processing system 40 according to the above recognition result. The recognition signal is, for example, a character code. The pro-processing system 40 stores the above output data as, for example, data of a word processor, and outputs it to the display 50, simultaneously. Display 50, for example, includes a CRT and displays the characters recognized by the data processing system 30 onto a screen.

The neural network structuring the data processing system 30 is structured as a part of a hardware. This data processing system 30, typically indicated in Figure 1, comprises 3 neural layers, an input layer 31, a middle layer 32 and an output layer 33, in which the middle layer 32 is arranged between the input layer 31 and the output layer 33. Each layer 31, 32 and 33 comprises a plurality of neurons n and the neurons n of input layer 31 are connected to all neurons n of middle neural layer 32, and the neurons n of the middle neural layer 32 are connected to all neurons n of the output layer 33.

Each neuron n outputs either "1" or "0" according to the formula (1) of the normalization function, as it is described with reference to Figure 4. Neuron n is structured, for example, by operational amplifiers. Weight Wn to be multiplied to a data input to each neuron n is obtained, for example, by a variable resistance connected to an input terminal of an operation amplifier. Threshold function is realized by, for example, switching elements. Accordingly, weight Wn is changed and output data is connected by changing variable resistance with respect to the output data of each neuron, so as to perform the learning control.

Figure 2 (a), (b), and (c) shows a typical input layer 31, a middle layer 32 and an output layer 33. They show the successive decrease in numbers of neurons in input layer 31, middle layer 32 and output layer 33. Here, numbers of neurons in input layer 31, middle layer 32, and output layer 33 are determined to be 64, 49, and 36, respectively, for the simple explanation, in which 8x8 neurons, 7x7 neurons and 6x6 neurons in both vertical and horizontal directions are respectively arranged. Also, the location of a neuron at the down left corner in this figure is determined as an origin, a neuron at the ith and jth location from left and from down, respectively, is determined as nij.

Each neuron of input layer 31 ignites with respect to characteristic data of character input through a video camera 10. For example, it is deemed that number of end points is expressed by ignition pattern of n11, n12, n21 and n22; and number of branch points is expressed by ignition patterns of n13, n14, n23 and n24. For example, it is deemed that Euler number is expressed by ignition patterns of n11, n21...n82. Accordingly, ignition pattern of neurons of input layer 31 is determined in accordance with an input character, artificially.

On the other hand, at output layer 33, a character or numerical value is expressed, for example, by nueron nii on a diagonal line connecting neurons at down left corner and down right corner (neurons in the broken frame). Accordingly, neurons on the above diagonal line express character codes of a character or the numerical values from 1 to 64. The ignition pattern of neurons of an output layer 33 is determined artificially. According to the present embodiment, number of ignition patterns of neuron nii on the diagonal line is 64 ways. Therefore, it is possible to recognize 64 kinds of characters, according to the present embodiment, so that recognition of, for example, the alphabet is possible. The numerical values indicate clustering results; i.e. clusters, of characters input from a video camera 10 by the predetermined method, as it will be described later.

Neurons of output layer 33 never ignite until learning of character recognition is performed, even if character data is input to a data processing system 30. The ignition of a neuron becomes possible by learning, and learning will be completed when the predetermined ignition pattern is output in accordance with input character data. The input and output patterns for learning is the representative data to be processed at the neural network. Data to be processed actually covers a wide area. Learning is continuously executed until an adaptable association is performed with respect to the above representative input and output data. Therefore, when learning is completed, input layer 31 and output layer 33 output artificially determined ignition pattern, as it is described above, according to input character data.

Hereinafter, the corresponding relationship among neurons in each neural layer is described.

Neurons in each layer are divided into the neuron groups with a fixed number of neurons. According to the present embodiment, one neuron group is comprised with 4 neurons. As to input layer 31, shown in Figure 2 (a), neuron group a1, for example, comprises neurons n16, n26, n17 and n27; and neuron group a2 comprises neurons n26, n36, n27 and n37. Equivalent to the above, neuron groups a3, a4, a5, a6 and a7 can be defined by shifting one neuron column to the right, successively. Each neuron group a1 to a7 corresponds to neuron n16, n26, n36, n45, n56, n66 and n76 in middle layer 32, respectively. That is, a neuron group in input layer 31 corresponds to a neuron in middle layer 32 which locates at the same coordinates as the neuron at lower left corner of a neuron group in input layer 31 (as to neuron group a1, it corresponds to neuron n16).

Similar to the above, neurons in middle layer 32 are also divided into neuron groups each of which comprises 4 neurons. Each neuron group corresponds to a neuron in output layer 33 as the same manner as it is described above.

As it is understood from Figure 2 (a), neurons in a part of each neuron group belong to the adjacent neuron group at the same time. For example, neurons n26 and n27 of neuron group a1 also belong to neuron group a2 which locates right next to neuron group a1. Nuerons n16 and n26 of neuron group a1 also belong to neuron group a8 which locates below the neuron group a1. Therefore, each neuron group overlaps to the adjacent neuron groups.

When number of neurons in input layer 31, number of neurons of a neuron group in input layer 31, number of neuron strings belonging to another neuron group adjacent to that neuron group, and number of neuron groups in input layer 31 are deemed to be Ni, a, v and x, respectively, their relationship can be expressed by the following formula as it is understood from Figure 3:

$$(\sqrt{a} - v) \times (x - 1) + \sqrt{a} = \sqrt{Ni}$$

Therefore,

$$x = (\sqrt{Ni} - v)/(\sqrt{a} - v)$$

Here, each numerical value Ni, a, and v should be selected so that x becomes an integral number. According to a numerical value a, however, it is possible to determine the number of neurons of a neuron group locating at the very corner part to be different to that of the other neuron groups.

Since each neuron group in input layer 31 perfectly corresponds to each neuron of middle layer 32, number of neuron groups in input layer 31, x, is equal to the number of neurons in middle layer 32. Therefore, number of neurons in middle layer 32, Nm, is calculated as follows:

$$Nm = \{(\sqrt{Ni} - v)/(\sqrt{a} - v)\}^2 \quad (2)$$

The above relationship can be generalized that number of neurons $N_n$ in the nth neural layer is:

$$N_n = \{(\sqrt{N_{n-1}} - v)/(\sqrt{a} - v)\}^2 \quad (3)$$

where, "$N_{n-1}$" is the number of neurons in (n-1)th neural layer.

Number of neurons in input layer 31 is determined according to the contents of the processing for an input data. That is, in the case of character recognition, for example, number of neurons in input layer 31 is determined with respect to the kinds of characteristic data of a character. On the other hand, number of neurons in output layer 33 is determined according to the output contents. As for the character recognition, number of neurons are determined according to the kinds of character codes or cluster of characteristic data. For example, 64 neurons are to be prepared to the system for the alphabet recognition. Therefore, number of neurons in input layer 31 and output layer 33 are determined according to the processing contents of the present data processing system. On the other hand, number of neurons in middle layer 32 are determined, as it is indicated by the formula (2), according to the number of neurons in input layer 31 and number of neurons in neuron group, etc. Of course, the relationship between the number of neurons in middle layer 32 and output layer 33 are similar to the relationship between input layer and middle layer, so that the formula (3) has to be fulfilled.

Accordingly, it is possible to have more than 2 neural layers for middle layer, though only 3 neural layers of each input layer 31, middle layer 32 and output layer 33 are prepared in Figure 1 and Figure 2 (a) to (c). Hereinafter, the manner to decide the number of neural layers is described.

As it is described above, numbers of neurons in input layer 31, Ni, and in output layer 33, No, are determined according to an object of a data processing system. On the other hand, number of neurons included in a neuron group, a, and number of neuron strings belong to another adjacent neuron group, v, at the same time (the percentage of overlapping) are calculated at experimental basis. For example, a is "4" and v is "1" (in this case, the percentage of overlapping is 50%). Once the number of neurons in input layer 31, Ni, number of neurons in a neuron group, a, and the percentage of overlapping, v, are determined, number of neurons in the 2nd layer (the 1st middle layer), N2, is determined by the formula (3). The, number of neurons in the 3rd layer (the 2nd middle layer), N3, is determined from the formula (3). The above calculation is proceeded until the number of neurons in the (n + 1)th layer become smaller than the number of neurons in output layer 33, No, so that the nth layer becomes the middle layer at just before output layer 33.

Although, number of neurons included in a neuron group, according to the above embodiment, was determined to 4, it is possible to determine preferable number of neurons as it is necessary. Also, it does not have to set up the same value for the number of neurons in a neuron group, a, and the percentage of overlapping, v, with respect to the layers from input layer 31 to output layer 33. It may be necessary that when a plurality of middle layers 32 is prepared, the last middle layer has to have the different number of neurons, a, and the different percentage of overlapping than the other middle layers, so that each neuron in the last middle layer will correspond perfectly to each nueron in output layer 33.

As to output layer, it does not have to be structured to express the character codes in accordance with the neurons on the diagonal line. It is possible to be structured to define the recognized character according to all neurons.

According to the present embodiment, each layer is figured as a square and neurons are arranged as a neat grid. However, since it is a schematic drawing that the arrangements may be different physically. For example, there may be a case that a neuron is structured by a computer memory. For this case, the physical arrangement of neurons on the memory is not to be concerned.

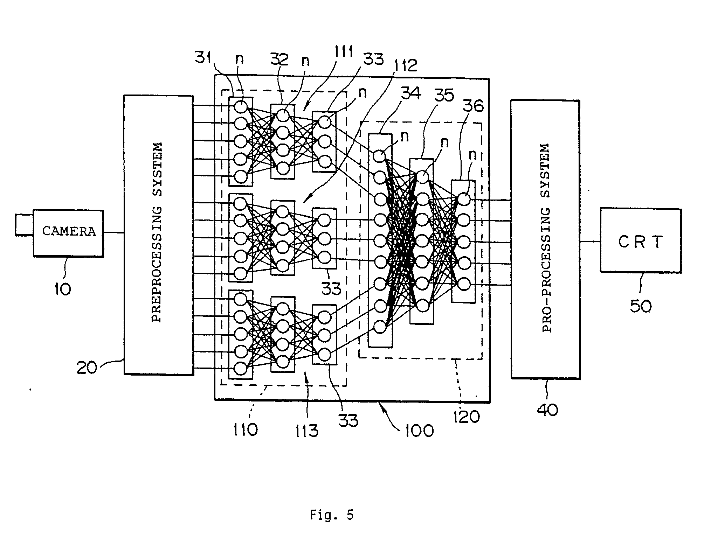

The character recognition system according to Figure 5 comprises a video camera 10, a preprocessing system 20, a data processing system 100, a pro-processing system 40 and a display 50. Video camera 10 is prepared for inputting characters and is connected to a preprocessing system 20. A preprocessing system 20 is, for example, a known image processing system that performs the filtering processing onto the data of input character and binarizes the data as well as extracts the characteristic data of input character (for example, number of end points, number of branch points, etc.) and outputs these characteristic data to the data processing system 100. The data processing system 100 structures the neural network, as it is described later, and recognizes an input character from the preprocessing system 20 with respect to its characteristic data, then outputs data to the pro-processing system 40 according to the above recognition result. The recognition signal is, for example, a character code. The pro-processing system 40 stores the above output data as, for example, data of word processor, and outputs it to the display 50 simultaneously. Display 50, for example, is structured by CRT, and displays recognized character by a data processing system 100 onto an image.

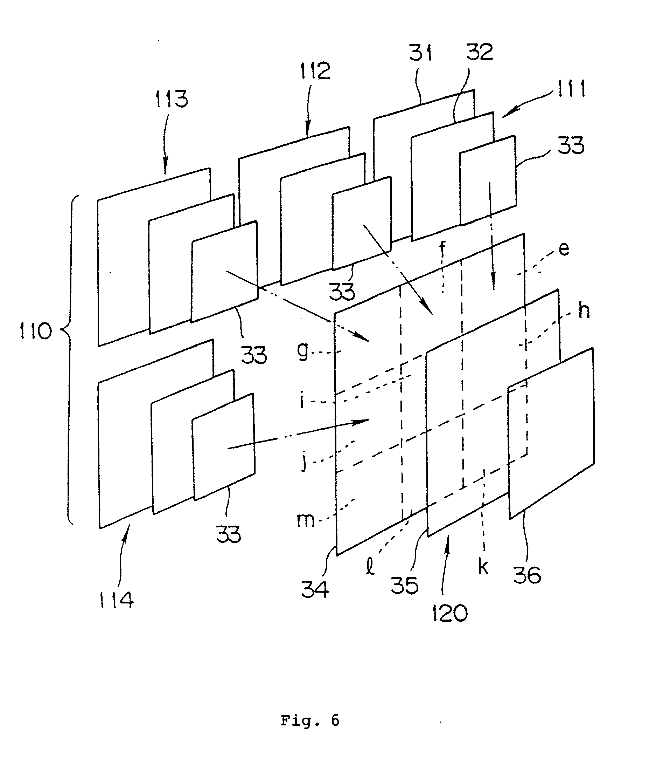

The neural network structuring a data processing system 100 is structured, for example, as a part of a hardware. This data processing system 100, typically indicated in Figure 6, comprises preprocessing portion 110 and pro-processing portion 120. Preprocessing portion 110 actually comprises 9 data processing portions, as it is described later; however, 3 data processing portions 111, 112, and 113 are shown in Figure 6. On the other hand, pro-processing portion 120 comprises one data processing portion.

Each data processing portion, according to this embodiment, comprises 3 neural layers, respectively. The structure of data processing portion is described with reference to data processing portion 111. Data processing portion 111 comprises 3 neural layers; input layer 31, middle layer 32 and output layer 33, in which middle layer 32 is arranged between input layer 31 and output layer 33. Each layer 31, 32 and 33 comprise a plurality of neurons n, respectively, in which neurons n of input layer 31 are connected to all neurons n of middle layer 32, and neurons n of middle layer 32 is connected to all neurons n of output layer 33. The structures of other data processing portions, such as 112 and 113 are similar to the data processing portion 111, as well as pro-processing portion 120. It comprises input layer 34, middle layer 35 and output layer 36. Neurons n of input layer 34 are connected to all neurons n in middle layer 35, and neurons n of middle layer are connected to all neurons n of output layer 36. The number of neurons in input layer 34 of pro-processing portion 120 is equivalent to the total number of neurons in each output layer 33 of preprocessing portion 110. Neuron of each output layer 33 is connected to one of neurons in input layer 34.

Figure 6 shows the structures of preprocessing portion 110 and pro-processing portion 120, solidly. According to this embodiment, preprocessing portion 110 actually comprises 9 data processing portions, as described above; however, only 4 data processing portions 111, 112, 113 and 114 are indicated in this figure. Also, each neuron in output layer 33 of each data processing of preprocessing portion 110 is connected to one neuron in input layer 34 of pro-processing portion 120, respectively. In other words, neurons in output layer 33 of preprocessing portion 110 and neurons in input layer 34 of pro-processing portion 120 perfectly correspond to each other. Input layer 34 of pro-processing portion 120 is divided into the same numbers of area; e, f, g, h, i, j, k, l and m, as the number of data processing portions of preprocessing portion 110 (as to the present embodiment, it is 9), each of which corresponds to output layers 33 of data processing portions 111, 112, 113 and 114 of preprocessing portion 110, respectively.

Although structures of input layer 34, middle layer 35 and output layer 36 of pro-processing portion 120 are similar to those of input layer 31, middle layer 32 and output layer 31 of preprocessing portion 110, respectively, functions of those are different. According to pro-processing portion 120, clusters with respect to input characters are input to input layer 34 from preprocessing portion 110, and character codes with respect to input characters are output from output layer 36. These character codes are expressed by, for example, neurons on a diagonal line connecting neurons at down left corner and down right corner, as it is shown in figure 2 (c).

As it will be described later, many quantities of variable analysis is performed at each data processing portion of preprocessing portion 110. The clustering data with respect to this many quantities of variable analysis is input to pro-processing portion 120, so as to perform many quantities of variable analysis, then character recognition.

As it is understood from Figure 2 (a), neurons in a part of each neuron group belong to the adjacent neuron group at the same time. For example, neurons n26 and n27 of neuron group a1 also belong to neuron group a2 which locates right next to neuron group a1.

In the second embodiment, the number of neurons in input layer 31, 34 and output layer 33, 36 are determined according to the processing contents of the present data processing system. On the other hand, number of neurons in middle layer 32, 35 are determined, as it is indicated by the formula (2), according to the number of neurons in input layer 31 and number of neurons in neuron group, etc. Of course, the relationship between the number of neuron in middle layer 32, 35 and output layer 33, 36 are similar to the relationship between input layer 31, 34 and middle layer 32, 35, so that the formula (3) has to be fulfilled.

Although 3 neural layers are prepared for both preprocessing portion 110 and pro-processing portion 120, respectively in Fig.5 and Fig.2 (a) to (c), it is possible to have more than 4 neural layers by preparing more than 2 middle layers. Hereinafter, the manner to decide the number of neural layers is described.

As it is described above, numbers of neurons in input layer 31 and 34, Ni, and in output layer 33 and 36, No, are determined according to an object of a data processing system. On the other hand, number of neurons included in a neuron group, a, and number of neuron strings belong to another adjacent neuron group, v, at the same time (the percentage of overlapping) are calculated at experimental basis. For example, a is "4" and v is "1" (in this case, the percentage of overlapping is 50%). Once the number of neurons in input layer 31, Ni, number of neurons in a neuron group, a, and the percentage of overlapping, v, are determined, number of neurons in the 2nd layer (the 1st middle layer), N2, is determined by the formula (3). Then, number of neurons in the 3rd layer (the 2nd middle layer), N3, is determined from the formula (3). The above calculation is proceeded until the number of neurons in output layer 33, No, so that the nth layer becomes the middle layer at just before output layer 33, 35.

Hereinafter, learning of character recognition according to the present embodiment is described.

According to the present embodiment, Euler number, area and number of groups are input as the characteristics data from preprocessing system 20 to the 1st data processing portion 111 to be clustered. The 1st data processing portion is for the judgment of input characters, such as Chinese characters and hiragana characters that belong to which clusters with respect to Euler number, area and number of groups as the parameters, so as to classify confusing characters into the same cluster group. For example,

" 木 "

and

" 本 "

are classified into the same cluster group. Such clustering as above is possible from learning by inputting print characters from a video camera, as it will be described later.

Similar to the above, horizontal direction, vertical direction, stroke distribution of direction of right upward inclination and left upward inclination are input from preprocessing system 20 to the 2nd data processing portion 112 to be clustered. Number of branch points with 3 branches and 4 branches, and number of end points are input from preprocessing system 20 to the 3rd data processing portion 113 to be clustered. Other data processing portions perform clustering with respect to predetermined characteristics data input from preprocessing system 20.

A neuron in each output layer 33 of preprocessing portion 110 will never ignite until learning of character recognition is performed, even the character data is input to data processing system 30. This neuron is ignitable by learning. Learning will be completed when a neuron indicates the predetermined ignition pattern according to the input character data. According to the above learning, each output layer 33 is connected to pro-processing system 40 and the clustering result output from output layer 33 is indicated at CRT 50. As it is described above, characters input from a video camera 10 are the print characters and clusters with respect to each characteristics data is predetermined for each print character. Accordingly, learning is proceeded until preprocessing portion 110 outputs predetermined clusters according to the input characters.

Input layer 31 and output layer 33 will indicate the artificially determined ignition pattern according to the input character data, when learning is completed, as it is described above. Then, it is assumed that ignition patter will smoothly change over each layer of input layer 31, middle layer 32, and output layer 33, successively. According to the present embodiment, weights of middle layer 32 and output layer 33 are changed so that ignition pattern will smoothly change over those layers during the learning process. As it is described above, a data processing portion comprises as many number of middle layers calculated by the formula (3) at the end of learning; however, it comprises only one middle layer at the beginning of learning.

Under the condition that one middle layer 32 is prepared, the decision of whether the neurons in middle layer 32 should ignite or not is made, concerning the ignitions of a plurality of corresponding neurons in input layer 31 and output layer 33. When more than predetermined percentage of neurons among a plurality of corresponding neurons in input layer 31 and output layer 33 ignite or should be ignited, neurons in middle layer 32 are determined to have a tendency to ignite, so that weights of predetermined neurons in middle layer 32 and output layer 33 are increased for the above ignitions.

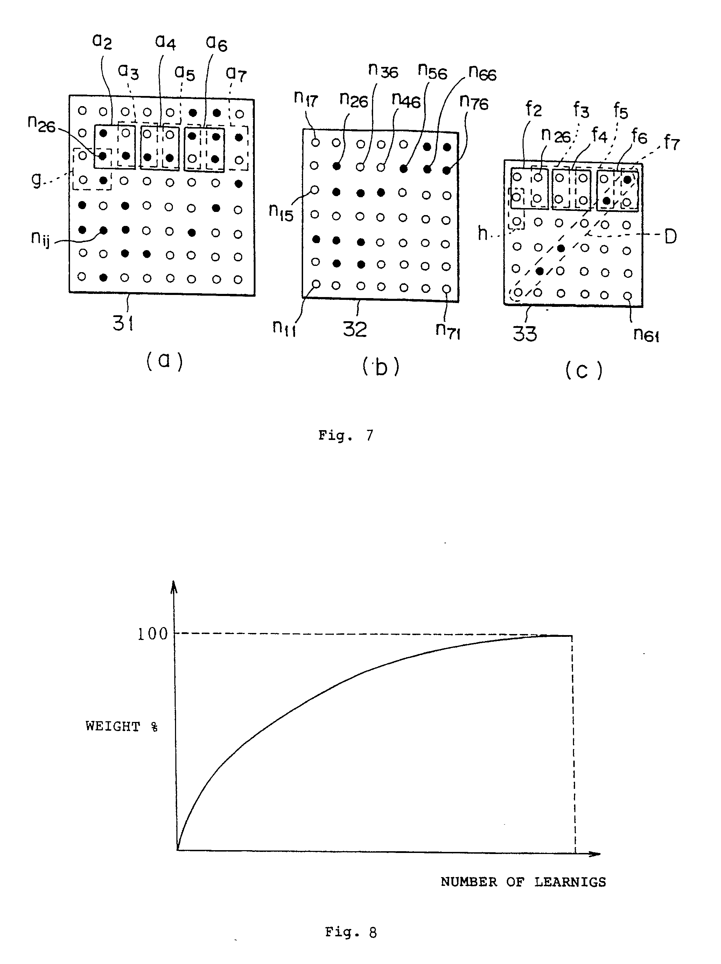

The determination manner of whether such neurons in middle layer should be ignited or not is described with referring to Fig 7 (a) to (c). Fig.7 (a), (b) and (c) show ignition patterns of input layer 31, middle layer 32 and output layer 33, respectively. In the figures, black circles indicate igniting neurons and white circle indicate neurons other than igniting neurons. According to this embodiment, input layer 31 expresses the ignition pattern as shown in figure according to the characteristics data of input character. Also, output layer 33 has to express the ignition pattern as shown in figure so as to output clusters according to the characteristics data of the above character. Accordingly, the ignition pattern of input layer 31 in the figure is fixed with respect to the input character, and the ignition pattern of output layer 33 indicates the ignition pattern when learning is completed. On the other hand, the ignition pattern tendency of middle layer 32 will be determined according to the ignition patterns of input layer 31 and output layer 33, as it will be described later.

The corresponding relationship among neurons in each layer when such tendency of the ignition pattern is determined, is similar to the one described with referring to Fig. 2 (a) to (c). However, according to middle layer 32, neurons locating at corner n11, n71, n17 and n77 correspond to 4 neurons in input layer 31, respectively, and neurons in output layer 33 locating at corner n11, n61, n16 and n66. Also, neurons in middle layer 32 locating on outer truck ni1, ni7, n1j and n7j correspond to 4 neurons in input layer 31, respectively as above, and to neurons n(i-1)1 and ni1, and neurons n6(j-1) and n6j in output layer 33, respectively.

According to the present embodiment, neurons in middle layer 32 are judged to have the tendency to ignite when more than 40% of a plurality of corresponding neurons in input layer 31 and output layer 33 ignite. As to Fig.7 (b), three neurons are igniting among corresponding neurons in input layer 31 and output layer 33 to a neuron n26 in middle layer 32 (totally 8 neurons in the areas a2 and f2). Therefore, neuron n26 in middle layer 32 is judged to have the tendency to ignite. Meanwhile, two neurons are igniting among corresponding neurons in input layer 31 and output layer 33 to a neuron n15 in middle layer 32 (totally 6 neurons in the areas g and h). Therefore, neuron n15 in middle layer 32 is judged not to have the tendency to ignite. Accordingly, neurons in middle layer 32 is judged to have the tendency to express the ignition pattern as shown in Fig. 7 (b).

According to character recognition learning of the present embodiment, weight of each neuron in middle layer 32 and output layer 33 is increased up to the predetermined value so as to obtain the ignition pattern as it is obtained above.

Such weight increase can be described as follows with referring to Fig.7. When output data O of neuron 1 in middle layer is the value at the ignition (for example, "1"), the weights of synapses (in this case, ""W2" and "W3") corresponding to data (for example, "I2" and "I3") input from igniting neuron among neurons in input layer connecting to the above neuron 1 is increased by, for example, 5%. Weights of synapses of neurons in output layer are processed in the same manner, so that weights of synapses with respect to the neurons in middle layer that is determined to be ignited are increased by, for example, 5%.

Accordingly, weights in middle layer 32 and output layer 33 are increased so that ignition pattern over layers of input layer 31, middle layer 32

and output layer 33 changes smoothly. Here, if each neuron in input layer 31 and output layer 33 is determined to ignite with the same frequency with respect to all input characters, equable ignition of each neuron in middle layer will be possible. According to the above, it become possible to prevent falling into local minimum. Furthermore, each neuron in middle layer 31 will ignite equally. That is, it is possible to prevent the occurrence of neurons that does not ignite, so as to have the efficient performance of neurons in middle layer 32.

Increase in weight of synapse according to one learning time is changed as shown in Fig.8, with respect to the number of learnings. Total learning is gradually performed after a plurality of learnings, and minor adjustment for the small change is performed at the end of learning. Learning speed is heightened by the rapid increase in weight at the beginning of learning.

After the learning with one middle layer is completed as above, another middle layer is added so as to increase the synapse weights with respect to the 2nd middle layer and an adjacent layer at output side of this 2nd middle layer (output layer or the 1st middle layer), concerning whether more than the predetermined percentages of neurons among a plurality of corresponding neurons will ignite or not. Accordingly, weight distribution with respect to four neural layers is obtained. Weight distribution with respect to five layers can also be obtained by the same manner.

The middle layers are being added as many number as it is determined by the above formula (3).

When the learnings are completed, input layer 31 and output layer 33 will express the artificially determined ignition pattern according to the input characters.

After the learning of preprocessing portion 110, learning of pro-processing portion 120 is performed. As it is shown in Fig.5. learning of pro-processing portion 120 is performed by connecting preprocessing portion 110 and by increasing middle layers one by one as the same manner as the learning of preprocessing portion 110. The characters input from a video camera 10, according to the 1st stage of learning of pro-processing portion 120 are the print characters, and pro-processing portion 120 performs character recognition with respect to the clusters of the characteristics data input to input layer 34. The 1st stage of learning is completed, when the character codes corresponding to the characters are output from output layer 36. Then handwriting characters are input to perform the 2nd stage of learning as the same manner. At the beginning of learning with respect to the handwriting characters, characters resemble to the print characters will be input. However, as the learning is proceeded, various forms of characters are input so as to proceed the learning to the predetermined level.

Although number of neurons included in a neuron group was determined to 4, according to the embodiment as it is described with referring to Fig.2 (a) to (c), it is possible to determined preferable number of neurons as it is necessary. Also, it does not have to set up the same value for the number of neurons in a neuron group, a, and the percentage of overlapping, v, with respect to the layers from input layer to output layer. It may be necessary that when a plurality of middle layers are prepared, the last middle layer has to have the different number of neurons, a, and the different percentage of overlapping than the other middle layers, so that each neuron in the last middle layer will correspond perfectly to each neuron in output layer.

As to output layer 36, it does not have to be structured to express the character codes in accordance with the neurons on the diagonal line. It is possible to be structured to define the recognized character according to all neurons.

According to the present embodiment, each layer is figured as a square and neurons are arranged as a neat grid. However, since it is a schematic drawing that the arrangements may be different physically. For example, there may be a case that a neuron is structured by a computer memory. For this case, the physical arrangement of neurons on the memory is not to be concerned.

Furthermore, the present invention is applicable not only to the character recognition, but also to configuration recognition and voice recognition.

As mentioned above, according to the present invention, it is possible to have an effect that a data processing system can be structured with a necessary minimum number of neurons with respect to the processing object.

## Claims

1. Data processing system characterized in that;

   a plurality of neural layers is prepared which comprises a plurality of neurons each of which outputs a predetermined data after igniting according to the predetermined processing results performed onto an input data;

   neurons in the above neural layers are divided into the neuron groups with a fixed number of neurons;

   neurons in a part of each neuron group belong to the adjacent neuron group at the same time;

neurons in each neuron group correspond to neurons in the following neural layer, respectively;

number of neurons $N_n$ in the nth neural layer can be calculated by the following formula:

$$N_n = \{(\sqrt{N_{n-1}} - v)/(\sqrt{a} - v)\}^2$$

where, "$N_{n-1}$" is the number of neurons at (n-1)th layer; "a" is the number of neurons in one neuron group; and "v" is the number of strings that belong to another adjacent neuron group.

2. Data processing system characterized in that:

a plurality of neural layers are prepared which comprises a plurality of neurons each of which outputs a predetermined data after igniting according to the predetermined processing results performed onto an input data;

a plurality of the mutually independent data processing portions are prepared which comprise a plurality of the above neural layers;

neurons in a part of each neuron group belong to the adjacent neuron group at the same time;

neurons in each neuron group correspond to neurons in the following neural layer, respectively;

number of neurons $N_n$ in the nth neural layer can be calculated by the following formula:

$$N_n = \{(\sqrt{N_{n-1}} - v)/(\sqrt{a} - v)\}^2$$

where, "$N_{n-1}$" is the number of neurons at (n-1)th layer; "a" is the number of neurons in one neuron group; and "v" is the number of strings that belong to another adjacent neuron group.

3. Data processing system according to claim 2, characterized in that:

said system includes a preprocessing portion comprising a plurality of the mutually independent data processing portions and a pro-processing portion comprising at least one data processing portion;

output data from the above preprocessing portion is input to the pro-processing portion.

FIG. 1

Fig.2

Fig.3

Fig.4

Fig. 5

Fig. 6

Fig. 7

Fig. 8

WEIGHT %

100

NUMBER OF LEARNIGS